# FASCICULE DE BREVET EUROPEEN

(11) **EP 0 677 758 B1**
(45) Date de publication et mention de la délivrance du brevet: **02.01.2002**
(21) Numéro de dépôt: 95400812.4
(22) Date de dépôt: 11.04.1995
(51) Int. Cl.: G02B 6/42, G02B 6/255

(54) **Système optique pour coupler une fibre à mode circulaire et un phototransducteur à mode elliptique et son procédé de fabrication**
Optische Anordnung zum Koppeln einer optischen Faser mit einem kreisförmigen Modenfeld und eines optoelektronischen Wandlers mit einem elliptischen Modenfeld sowie deren Herstellungsverfahren
Optical system for coupling an optical fibre with a circular mode and a phototransducer with an elliptic mode and its manufacturing process

(30) Priorité: 13.04.1994 FR 9404368
(43) Date de publication de la demande: 18.10.1995
(73) Titulaire: FRANCE TELECOM, 75015 Paris (FR)
(72) Inventeur: Semo, Jack, F-91120 Palaiseau (FR); Kalonji, Ndiata, F-94200 Ivry S/Seine (FR)
(74) Mandataire: Texier, Christian

(56) Documents cités:
- EP-A- 0 155 379
- EP-A- 0 294 650
- EP-A- 0 603 042
- FR-A- 2 681 437
- US-A- 3 910 677
- US-A- 4 143 940
- IEEE PHOTONICS TECHNOLOGY LETTERS, vol. 5,no. 2, Février 1993 NEW YORK, pages 184-186, PRESBY ET AL.
- IEEE PHOTONICS TECHNOLOGY LETTERS, vol. 4,no. 8, Août 1992 NEW YORK, pages 897-899, PRESBY ET AL.
- PATENT ABSTRACTS OF JAPAN vol. 6 no. 255 (P-162) ,14 Décembre 1982 & JP-A-57 150810 (FUJITSU) 17 Septembre 1982,
- PATENT ABSTRACTS OF JAPAN vol. 7 no. 282 (P-243) ,16 Décembre 1983 & JP-A-58 158620 (HITACHI SEISAKUSHO) 20 Septembre 1983,
- Electronics Letters, Vol.18, No.17, 1992, pages 1654-1656

## Description

La présente invention concerne le domaine des fibres optiques destinées à être couplées avec un phototransducteur.

Dans le cadre de la présente invention, l'expression "phototransducteur" regroupe les dispositifs optiques récepteurs aptes à transformer un signal optique reçu en provenance d'une fibre optique, en un signal électrique, et les dispositifs optiques émetteurs aptes à générer un signal optique en direction d'une fibre optique. Ces dispositifs optiques récepteurs et/ou émetteurs peuvent être formés de circuits intégrés optiques.

Plus précisément, la présente invention concerne un système optique comportant des moyens de couplage perfectionnés entre une fibre optique et un phototransducteur, aussi bien dans le sens de l'émission phototransducteur-fibre que dans celui inverse de la réception.

La présente invention s'applique tout particulièrement au domaine des télécommunications.

Différentes solutions et de multiples combinaisons optiques ont été élaborées jusqu'à ce jour pour réaliser le couplage entre un phototransducteur et une fibre optique.

Le document "Progress in Monomode Optical-Fiber Interconnection Devices", paru dans "Journal of Lightwave Technology, vol. LT-2, n°3, pp 217-227, Juin 1984", analyse différentes de ces solutions.

La Demanderesse a elle même proposé dans le document FR-A-2 681 437, un système optique obtenu à l'aide d'un procédé qui comprend les étapes consistant à :
- cliver une fibre optique,
- étirer coaxialement un tronçon d'une autre fibre jusqu'à rupture, sous l'action d'un chauffage,
- aligner le tronçon étiré de fibre sur l'extrémité clivée de la fibre optique et mettre en contact mécanique la pointe du tronçon étiré de fibre et le coeur de l'extrémité clivée de la fibre optique et
- souder sur le coeur de l'extrémité clivée de la fibre optique, une partie de la pointe du tronçon étiré de fibre pour former une lentille de courbure désirée.

Toutes ces solutions ne donnent cependant pas totalement satisfaction lorsque, comme celà est fréquent, les phototransducteurs et les fibres optiques possèdent des modes optiques différents. De fait les modes optiques des phototransducteurs sont généralement petits et elliptiques, typiquement 3 x 0,5 µm², tandis que les modes des fibres optiques sont généralement circulaires et plus larges, typiquement d'un diamètre de 8 à 11 µm.

L'adaptation des modes entre les fibres optiques et les phototransducteurs demeure en effet l'un des points clefs du couplage.

Pour tenter d'améliorer ce couplage certaines techniques de lentillage elliptique ont été proposées.

On a par exemple proposé de procéder à un usinage mécanique au laser CO₂ de l'extrémité de la fibre à coupler, dans le document H.M. Presby, C.R. Giles :"Asymmetric fiber microlenses for efficient coupling to elliptical laser beams", IEEE Photonics Technology Letters, Vol.5, N°2, February 1993.

Plus précisément, ce document propose dans le but de coupler dans une fibre monomode conventionnelle un faisceau de lumière de section elliptique (en provenance d'une source à mode elliptique), de former en bout de cette fibre (par micromachining par laser) une lentille hyperboloïdique assymétrique, dont la section droite est elliptique, propre à transformer le mode elliptique incident en un mode circulaire soutenable par la fibre.

On a également proposé de procéder à une attaque chimique d'une fibre à maintien de polarisation, suivie d'un polissage par fusion du coeur ainsi mis en relief pour former en son extrémité une lentille à section droite elliptique, dans le document W. Hunziker, E.Bolz et H.Melchior : "Elliptically lensed polarisation maintaining fibres", ELECTRONICS LETTERS, 13th August 1992, Vol.28, N° 17.

Plus précisément, ce document propose dans le but de coupler un faisceau de lumière de section elliptique (en provenance d'une source à mode elliptique sensible en polarisation, telle que diode laser ou waveguide modulator ou switch) dans une fibre monomode, d'utiliser comme fibre monomode une fibre à maintien de polarisation (de façon à éviter un contrôle en polarisation) soutenant un mode sensiblement circulaire, et de former en bout de cette fibre (par etching et melting) une lentille ellipsoïdique (dont la section droite est donc elliptique) propre à transformer le mode elliptique incident en ledit mode circulaire soutenable par ladite fibre à maintien de polarisation.

Les techniques proposées dans ces deux derniers documents ne donnent pas non plus totalement satisfaction. En effet, la mise en oeuvre des processus d'usinage mécanique et d'attaque chimique est assez délicate.

On peut également citer les documents suivants.

Le document US-A-4143940 propose dans le but de coupler un faisceau de lumière de section elliptique (en provenance d'une source laser à mode elliptique) dans une fibre monomode conventionnelle à coeur circulaire (et supportant donc un mode circulaire), de modifier (par chauffage/aplatissement) l'extrémité de cette fibre à coeur circulaire de façon à constituer un tronçon de fibre terminal ayant un coeur de section droite elliptique, et de former en bout de ce tronçon de fibre à coeur elliptique une couche réflectrice, puis (par dépôt de photorésist et développement) une lentille ellipsoïdique (dont la section droite est donc elliptique) propre à transformer le mode elliptique incident en ledit mode circulaire soutenable par la fibre.

Le document JP-A-57/150810 propose, dans le but de coupler dans une fibre monomode conventionnelle à coeur circulaire un faisceau de lumière à section elliptique émis par une fibre à "low polarisation" ayant un coeur à section elliptique, de former en bout de cette fibre avec coeur à section elliptique (via l'apport d'un morceau de matière optique) une lentille cylindrique convexe ou concave propre à transformer le mode elliptique en un mode circulaire.

Le document US-A-3910677 propose, dans le but de coupler dans une fibre monomode conventionnelle (à coeur circulaire) un faisceau de lumière de section elliptique (en provenance d'une source laser à mode elliptique), de former, par usinage mécanique, en bout de cette fibre une lentille hyperbolique cylindrique propre à transformer le mode elliptique en un mode circulaire soutenable par ladite fibre.

Le document IEEE Photonics Technology Letters, vol. 4, n° 8, 1992, pages 897-899 propose un procédé d'usinage mécanique de l'extrémité d'une fibre, pour la réalisation d'une lentille en hyperboloïde.

La présente invention a maintenant pour but de perfectionnner les techniques antérieures connues pour améliorer le couplage entre des fibres optiques possédant un mode circulaire et des phototransducteurs possédant un mode de nature elliptique.

Ce but est atteint dans le cadre de la présente invention grâce à un procédé tel que défini en revendication 1 annexée.

Selon une mise en oeuvre préférentielle, l'étape de dépôt de l'aiguille de la matière destinée à former la lentille de section elliptique et de profil en hyperboloïde consiste à :
- cliver le tronçon de fibre optique à maintien de polarisation,
- étirer coaxialement sous l'action d'un chauffage un tronçon d'une autre fibre jusqu'à rupture de façon à réaliser deux demi-tronçons ayant chacun une extrémité en forme de pointe,
- aligner l'un des deux demi-tronçons étirés de fibre sur l'extrémité clivée de la fibre optique à, maintien de polarisation et mettre en contact mécanique la pointe dudit demi-tronçon étiré de fibre et le coeur de l'extrémité clivée de la fibre optique à maintien de polarisation et
- souder sur le coeur de l'extrémité clivée de la fibre optique à maintien de polarisation, une partie de la pointe du demi-tronçon étiré de fibre tout en retirant, le restant de façon à ne déposer finalement que l'aiguille désirée.

Selon une autre caractéristique avantageuse de la présente invention, le tronçon de fibre optique à maintien de polarisation ainsi lentillé, est lui même fixé directement sur la fibre à coupler, ou sur un tronçon de fibre optique de nature différente, par exemple sur une fibre optique multimode à gradient d'indice ou à saut d'indice.

La présente invention concerne également le système optique obtenu par la mise en oeuvre du procédé précité, tel que défini en revendication 9 annexée.

D'autres caractéristiques, buts et avantages de la présente invention apparaîtront à la lecture de la description détaillée qui va suivre, et en regard des dessins annexés donnés à titre d'exemples non limitatifs et sur lesquels :
- les figures 1 et 2 représentent deux vues en coupe axiale longitudinale orthogonales entre elles, d'un tronçon de fibre à maintien de polarisation pourvu d'une lentille à section droite elliptique conformément à la présente invention,
- la figure 3 représente une vue en coupe transversale de cette lentille selon le plan de coupe référencé III-III sur la figure 1,
- les figures 4 à 10 représentent respectivement diverses étapes du procédé de fixation de la microlentille à section droite elliptique sur une surface clivée de la fibre optique à maintien de polarisation, conforme à la présente invention,
- la figure 11 représente une vue schématique en coupe axiale longitudinale d'un système conforme à la présente invention, et
- la figure 12 représente schématiquement une variante de réalisation conforme à la présente invention comprenant un ensemble de microlentilles à rayons de courbure croissants en regard d'une surface clivée d'une fibre optique à maintien de polarisation.

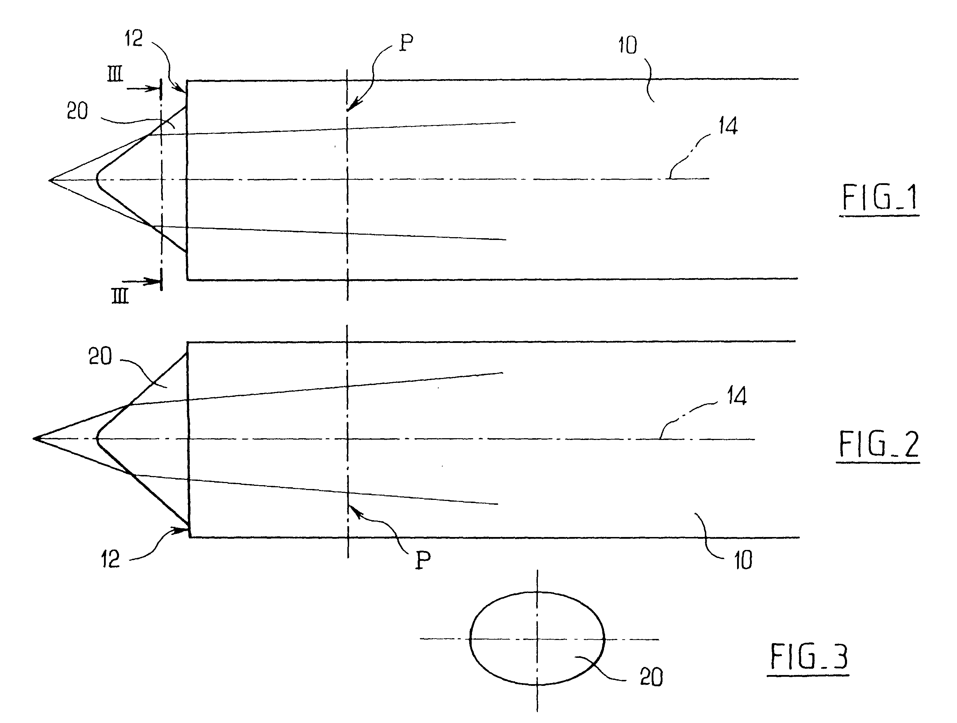

On aperçoit sur les figures 1 et 2 annexées une fibre à maintien de polarisation 10 présentant une surface d'extrémité clivée 12, plane et perpendiculaire à son axe longitudinal 14.

On aperçoit également sur les figures 1 et 2 annexées une lentille 20 en forme d'hyperboloïde à section droite elliptique, fixée sur l'extrémité clivée 12 de la fibre 10.

Les fibres à maintien de polarisation sont bien connues de l'homme de l'art. On trouvera par exemple un descriptif de ces fibres, y compris de leurs processus d'obtention et de leurs propriétés dans le document J.Noda, K.Okamoto et Y. Sasaki : "Polarization-Maintaining Fibers and their Applications", Journal of Lightwave Technology, Vol.17.4, N° 8, August 1986. Pour cette raison la structure de ces fibres à maintien de polarisation ne sera pas décrite par la suite.

On rappellera cependant que ces fibres à maintien de polarisation peuvent être de différents types, dont l'un des principaux concerne des fibres possédant un coeur de section droite généralement elliptique.

C'est précisément ce type de fibre à maintien de polarisation possédant un coeur de section droite elliptique qui est utilisé dans le cadre de la présente invention.

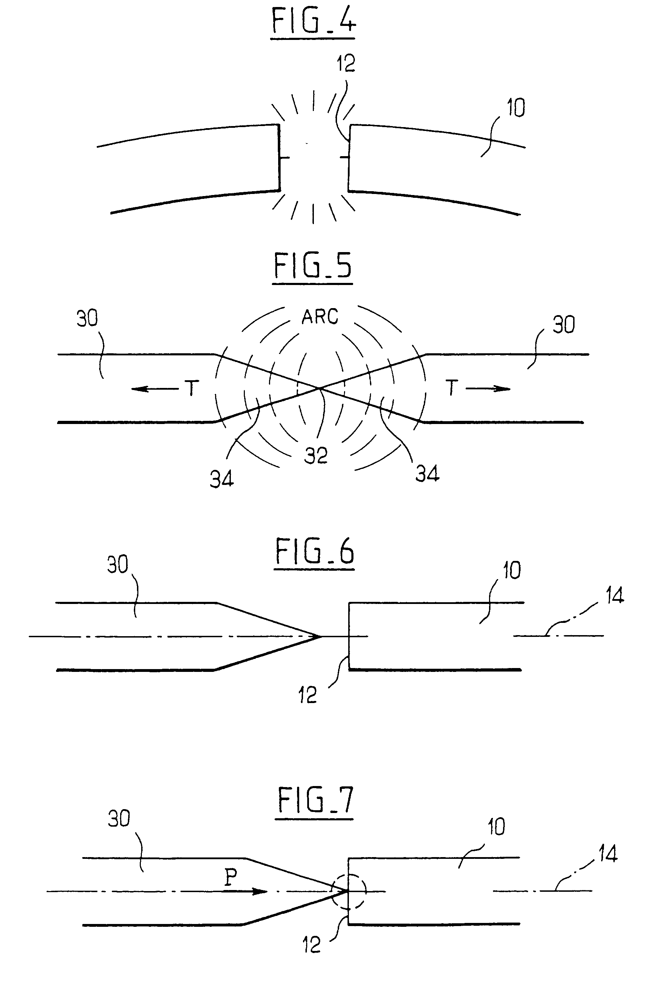

On va maintenant décrire, en regard des figures 4 à 10, un procédé préférentiel conforme à la présente invention permettant de déposer une microlentille 20 sur l'extrémité clivée 12 de la fibre optique 10 à maintien de polarisation.

La fibre 10 à maintien de polarisation est tout d'abord clivée, comme on le voit sur la figure 4, pour obtenir une face d'extrémité 12 perpendiculaire à son axe 14.

L'étape de clivage de la fibre optique 10 consiste à sectionner ladite fibre de sorte que sa face d'extrémité résultante 12 soit au moins sensiblement plane et orthogonale à son axe central.

Cette étape de clivage peut être réalisée selon tout processus de sectionnement connu de l'homme de l'art, le cas échéant, par simple courbure de la fibre 10 jusqu'à rupture brusque de celle-ci après amorce de rupture à l'aide d'un tranchant très dur, comme cela est schématisé sur la figure 4.

Pour former la lentille 20 sur l'extrémité clivée 12 de la fibre 10, on procède de préférence comme suit.

Comme représenté sur la figure 5, un petit tronçon d'une autre fibre 30 est étiré (traction T) coaxialement et symétriquement jusqu'à la rupture en un point 32, sous l'action d'un arc électrique.

La fibre étirée 30 possède avantageusement une température de fusion égale ou voisine à celle de la zone de la fibre à lentiller. Il peut s'agir par exemple d'une fibre multimode à gradient d'indice, voire d'une fibre monomode, bien que cette dernière posséde une température de fusion supérieure.

Le tronçon de fibre 30 peut avoir par exemple une longueur de l'ordre d'un dizaine de cm. A la fin de l'étape d'étirage, on obtient ainsi deux bouts de fibre optique 30 possédant chacun une extrémité effilée en cône 34.

Un bout étiré de fibre optique 30 est alors placé en regard de l'extrémité clivée 12 de la fibre 10 et aligné sur celle-ci, comme représenté sur la figure 6. Cet alignement peut être opéré par tout moyen approprié, par exemple en plaçant la fibre 10 clivée et le bout de fibre étirée 30, sur des supports en V appropriés. Les techniques connues d'épissurage de fibres optiques utilisent couramment de tels supports en V en saphir, présentant une précision de l'ordre du µm. Pour cette raison, ces supports en V ne sont pas représentés sur les figures annexées et ne seront pas décrits plus en détail par la suite.

La pointe de la fibre étirée 30 est ensuite mise en contact mécanique avec la face clivée 12 de la fibre 10, et ce sous une légère pression axiale P, comme représenté sur la figure 7, tout en conservant l'alignement antérieur entre la fibre étirée 30 et la fibre clivée 10.

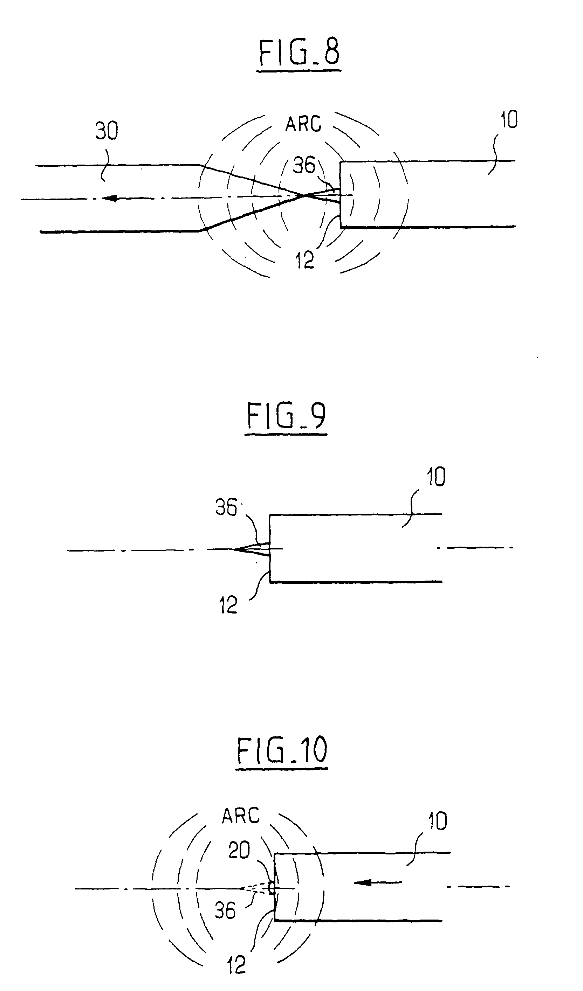

L'ensemble obtenu est soumis à un arc électrique, comme représenté sur la figure 8, pour obtenir une fusion rapide et de faible intensité de la pointe de la fibre étirée 30. Cette fibre 30 est retirée dès l'apparition du soudage de cette pointe sur la fibre clivée 10. Ce retrait de la fibre étirée 30 conduit à libérer une aiguille de verre 36 centrée et liée au coeur de la fibre clivée 10, comme représenté sur la figure 9.

Il reste alors, comme représenté sur la figure 10, à faire fondre l'aiguille de verre 36, à l'aide d'une ou plusieurs passes sous arc de faible intensité, pour transformer, de façon contrôlée, l'aiguille 36 en une lentille 20 de section droite elliptique et de courbures désirées.

L'ensemble des étapes précitées peut être mis en oeuvre en quelques minutes. On obtient alors une fibre optique 10 à maintien de polarisation comprenant une extrémité clivée 12 et une lentille 20 rapportée par soudure sur cette extrémité clivée 12.

Plus précisément le retrait de la fibre étirée 30 pour former l'aiguille 36 et la fusion ultérieure de celle-ci, sont contrôlées pour obtenir une lentille 20 qui possède un profil d'hyperboloïde autour de l'axe 14 de la fibre 10 comme on le voit sur les figures 1 et 2. L'asphéricité contrôlée ainsi obtenue est adaptée pour limiter les aberrations et optimiser le couplage.

Par ailleurs le procédé précédemment décrit permet d'obtenir une lentille 20 de section droite elliptique, considérée transversalement à l'axe 14 de la fibre 10, comme on le voit sur la figure 3.

Cette section droite elliptique est obtenue automatiquement grâce à l'utilisation de l'environnement elliptique du coeur de la fibre 10 à maintien de polarisation comme base d'accrochage de la lentille 20 en fabrication.

Les inventeurs ont constaté expérimentalement qu'il est très difficile d'obtenir une lentille de section droite elliptique par apport contrôlé de verre sur la surface clivée d'une fibre standard. En effet les forces de tension superficielle du verre en fusion minimisent la surface de la lentille dont la forme se rapproche naturellement d'une sphère. Et il est très difficile, voire impossible, sans usinage mécanique ou chimique, de modifier la section circulaire d'une lentille ainsi déposée sur une fibre standard.

En revanche l'expérience a montré que la température de fusion au voisinage du coeur d'une fibre 10 à maintien de polarisation étant inférieure à celle de sa gaine, si on ne dépasse pas la température de fusion de cette dernière, le procédé précité permet de réaliser une lentille 20 dont la base prend et conserve une section droite elliptique pendant toute la durée du procédé.

La lentille 20 de profil en hyberboloïde et de section droite elliptique permet par conséquent un couplage optimum avec le mode elliptique des phototransducteurs et permet par ailleurs de convertir ce mode elliptique en un mode circulaire.

En effet la lentille étant plus convergente dans le plan de la figure 1 que dans le plan de la figure 2, et les ouvertures du faisceau Gaussien issu d'un phototransducteur étant différentes dans ces deux plans, il existe un plan référencé schématiquement P sur les figures 1 et 2, où le mode du faisceau est circulaire.

Il suffit par exemple de placer ce plan P sur l'entrée d'une fibre optique associée à mode circulaire, comme on va l'exposer par la suite, pour obtenir alors un couplage optimum entre le mode elliptique d'un phototransducteur et le mode circulaire de ladite fibre.

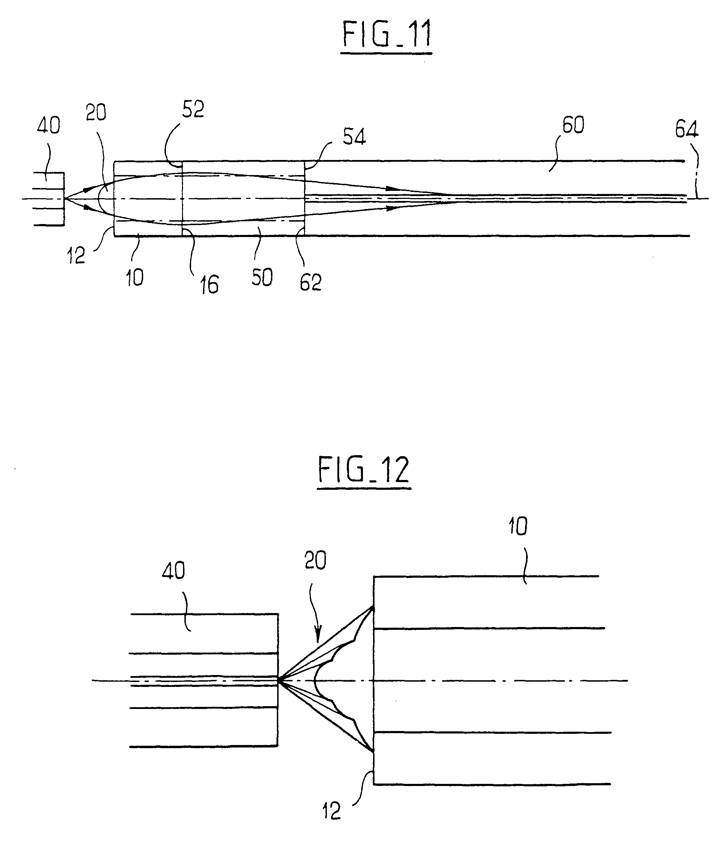

On a représenté sur la figure 11 annexée un système conforme à la présente invention ainsi obtenu.

On aperçoit sur la figure 11, un phototransducteur 40 placé en regard de la lentille 20. Par ailleurs sur la figure 11 on aperçoit un tronçon 50 de fibre multimode à gradient d'indice intercalé entre l'extrémité clivée 62 d'une fibre optique monomode 60 à mode circulaire et le tronçon 10 de fibre à maintien de polarisation. Le phototransducteur 40, la lentille 20, le tronçon de fibre 10 à maintien de polarisation et le tronçon 50 de fibre multimode à gradient d'indice sont tous centrés sur l'axe longitudinal 64 de la fibre monomode 60.

Plus précisément la lentille 20 est placée sur la surface clivée 12 du tronçon de fibre à maintien de polarisation 10. L'extrémité opposée 16 de ce tronçon de fibre 10, également clivée, est fixée sur une surface d'extrémité clivée 52 du tronçon de fibre 50 multimode à gradient d'indice. Et enfin l'extrémité opposée 54 de ce tronçon de fibre 50, également clivée, est fixée sur la surface d'extrémité clivée 62 de la fibre monomode 60.

Le tronçon de fibre multimode à gradient d'indice 50 est utilisé non pas en tant que fibre mais en tant que lentille à gradient d'indice.

On sait que les caractéristiques, diamètre du coeur et forme du gradient d'un élément de fibre multimode à gradient d'indice 50 conditionnent la périodicité de propagation de l'onde lumineuse guidée.

Ainsi, un élément de fibre multimode à gradient d'indice 50, de longueur calibrée, permet de fournir des couples angulaires d'entrée/sortie en parfaite correspondance. En d'autres termes, à partir d'un faisceau conique incident donné, la longueur de l'élément de fibre optique multimode à gradient d'indice 50 permet d'obtenir un faisceau conique de sortie quelconque choisi.

De ce fait, si l'on prend comme point de départ un faisceau d'entrée provenant du phototransducteur 40 et transitant par la microlentille 20, et le tronçon de fibre 10 à maintien de polarisation, de caractéristique connue, sur l'entrée de l'élément 50 de fibre multimode à gradient d'indice, l'on peut choisir sans difficulté la longueur de cet élément 50 pour obtenir un faisceau de sortie d'ouverture déterminée compatible avec les caractéristiques de la fibre monomode 60 à coupler.

De préférence, la longueur du morceau 50 de fibre optique multimode à gradient d'indice est inférieure à (n + 1) pitch/2 avec (n = 0, 1, 2...). Le "pitch" représente la période de la fibre multimode à gradient d'indice. La valeur du "pitch" est principalement déterminée par le profil du gradient d'indice.

On notera que l'aspect périodique de la propagation du faisceau à l'intérieur du tronçon 50 de fibre optique multimode permet d'accroitre la longueur de ce tronçon de fibre 50 de façon à faciliter la réalisation du système.

A la sortie de la microlentille 20, le cône d'ouverture du faisceau, bien que possédant l'angle au sommet préconisé, peut ne pas coïncider avec le cône d'ouverture de la fibre multimode à gradient d'indice 50. Pour ce faire, et obtenir ainsi le meilleur couplage entre le faisceau incident et le tronçon de fibre multimode 50, on peut intercaler entre le tronçon de fibre 10 à maintien de polarisation et le tronçon 50 de fibre optique multimode à gradient d'indice, un tronçon additionnel de fibre multimode à saut d'indice, de longueur calibrée. Ce tronçon de fibre optique multimode à saut d'indice joue le rôle d'intercalaire en matériau de même indice, entre la fibre 10 et le tronçon 50 de fibre optique multimode à gradient d'indice. Le tronçon de fibre optique multimode à saut d'indice permet donc d'augmenter le diamètre du faisceau incident jusqu'au diamètre utile de la fibre optique 50 multimode à gradient d'indice. Il procure en outre au système un avantage appréciable en accroissant la distance frontale entre le phototransducteur 40 et la microlentille 20.

En variante, on peut utiliser en guise de saut d'indice le tronçon de fibre 10 à maintien de polarisation comme élément de verre intercalaire (ce qui évite une manipulation supplémentaire).

L'utilisation des composés précités conformes à la présente invention, permet d'adapter parfaitement le faisceau divergent issu d'une source 40 à l'entrée de la fibre monomode 60. Le couplage se trouve en effet optimisé par la parfaite adéquation entre les conditions de propagation de la lumière (ouverture de faisceaux) et les modes propres des différentes fibres.

Les améliorations qui découlent de l'utilisation du système qui vient d'être décrit, en particulier l'utilisation d'un faisceau très ouvert et non convergent en sortie de la microlentille 20, contrairement aux systèmes conventionnels, sont :
1) une réduction des pertes de couplage, surtout dans le cas de faisceaux très divergents,
2) un éloignement important de la fibre ayant pour conséquence :
   a) une distance focale plus importante de la lentille d'entrée,
   b) une diminution de la rétroaction de la fibre sur le phototransducteur,
   c) un accroissement de la distance de sécurité, ou distance frontale, du phototransducteur 40,
   d) une plus grande facilité d'alignement de celui-ci avec la fibre,
   e) une meilleure stabilité du couplage,
   f) l'augmentation du (des rayons de courbure) de la microlentille qui favorise l'alignement en réduisant la précision généralement requise.

L'assemblage fibre monomode 60, convertisseur d'ouverture numérique formé par les tronçons de fibres 50 et 10/microlentille 20 est réalisé de préférence par épissurage en choisissant avantageusement des fibres 60, 50 et 10 de même diamètre extérieur, par exemple de 125µm. Un tel épissurage peut être réalisé à l'aide d'une machine conventionnelle à épissurer telle que par exemple le modèle commercialisé sous la référence BFS50 par la Société BEALE INTERNATIONAL TECHNOLOGY.

La coupe des éléments de fibre 10, 50, 60, quant à elle, peut être obtenue avec une cliveuse de précision disponible sur le marché, telle que la cliveuse FUJIKURA CT-07.

L'aspect monolithique du système obtenu après épissurage successif à partir de la fibre monomode 60, jusqu'à la réalisation de la lentille 20, permet d'obtenir rapidement le couplage optimal avec le phototransducteur 40.

Selon encore un autre perfectionnement de la présente invention, il est prévu dans le cadre de la présente invention de ne pas déposer une lentille 20 simple sur la face clivée du tronçon de fibre 10 à maintien de polarisation, mais de placer sur cette face clivée une multilentille, c'est-à-dire une succession de lentilles coaxiales, convexes, de rayons de courbure croissants en rapprochement de la fibre 10. Toutes ces lentilles 20 possèdent des sections généralement elliptiques et définissent en combinaison un profil généralement en hyperboloïde.

On distingue sur la figure 12 annexée, un tel ensemble de lentilles 20 déposé sur la face clivée 12 d'un tronçon de fibre 10 à maintien de polarisation.

Pour réaliser plusieurs lentilles de diamètre croissant, il convient de réitérer les étapes précitées représentées sur les figures 4 à 10, un nombre de fois égal au nombre de lentilles que l'on souhaite déposer.

En d'autres termes, la pose de la seconde lentille, et éventuellement de toute lentille ultérieure, est opérée grâce à la séquence d'étapes consistant à :
a) étirer un nouveau tronçon de fibre optique 30,
b) aligner la pointe 34 obtenue sur l'axe de la lentille antérieure 20, avec mise en contact et légère pression,
c) souder en surface la pointe 34 sous l'arc électrique,
d) libérer une aiguille calibrée 36 par traction de la pointe sous l'arc, et
e) lentiller par fusion contrôlée l'aiguille 36 ainsi obtenue.

Il convient de noter qu'au cours de l'étape a) d'étirage d'un nouveau tronçon de fibre optique 30, la conicité de la pointe obtenue par étirage doit être contrôlée pour pouvoir libérer, à l'étape d), une aiguille de taille convenable compatible avec le rayon de courbure désiré pour la nouvelle lentille.

De plus, la puissance de l'arc électrique utilisé au cours des étapes c), d) et e) doit être adaptée à chacune des étapes mentionnées, sous peine de voir disparaître les masses de verre les plus petites.

Pour opérer la fusion requise de la fibre 30, les inventeurs ont utilisé lors d'essais une microsoudeuse du type BTT. Une telle microsoudeuse engendre un arc électrique.

L'utilisation d'un chauffage à l'arc électrique n'est cependant pas obligatoire. Il peut être remplacé par un chauffage à l'aide d'une source laser de puissance, pourvu que l'on veille à respecter un alignement précis entre la fibre clivée 10 et l'extrémité étirée 34 qui apporte la microlentille 20, et que l'on veille à produire une fusion locale très rapide de la pointe 34 afin de souder sur la fibre clivée 10 une aiguille de verre 36 de dimension appropriée.

Au cours des étapes d'alignement des différents composants du système optique conformes à la présente invention, notamment au cours de l'alignement des fibres 10, 50 et 60, ainsi que de l'alignement des lentilles 20 sur la face clivée 12 du tronçon de fibre associé 10, un signal optique peut être injecté à l'extrémité non utilisée de la fibre 60. Le signal optique est alors véhiculé par le coeur de la fibre 60, et le passage du signal optique dans l'élément placé en regard et en cours d'alignement permet de vérifier le positionnement correct des composants.

Un telle étape de contrôle optique d'alignement peut compléter efficacement l'alignement mécanique.

Bien entendu la présente invention n'est pas limitée aux modes de réalisation particuliers qui viennent d'être décrits mais s'étend à toute variante conforme à son esprit.

Ainsi par exemple la géométrie de la lentille 20 peut être affinée si celà s'avère nécessaire, aprés dépôt sur l'extrémité clivée 12 de la fibre à maintien de polarisation 10, par usinage, par exemple par usinage mécanique ou attaque chimique.

## Revendications

1. Procédé pour coupler une fibre optique (60) possédant un mode circulaire et un phototransducteur (40) possédant un mode de nature elliptique, comprenant les étapes qui consistent à déposer une aiguille (36) de matière de fibre optique sur une première face terminale clivée (12) d'un tronçon de fibre à maintien de polarisation (10) possédant un coeur dont la section droite est elliptique et dont la température de fusion est inférieure à celle de la gaine de ce tronçon de fibre à maintien de polarisation et conformer sous chauffage cette aiguille (36) pour réaliser une lentille (20) de section droite elliptique et de profil en hyperboloïde dont la base coïncide sensiblement avec la section droite elliptique du coeur du tronçon de fibre à maintien de polarisation (10), puis à placer la seconde face terminale clivée (16) de ce tronçon de fibre à maintien de polarisation (10) en regard d'une face terminale clivée (62) de ladite fibre à mode circulaire (60).

2. Procédé selon la revendication 1, dans lequel l'étape de dépot de l'aiguille de matière destinée à former la lentille (20) de section droite elliptique et de profil en hyperboloïde consiste à :
- cliver le tronçon de fibre optique (10) à maintien de polarisation,
- étirer coaxialement sous l'action d'un chauffage un tronçon d'une autre fibre (30) jusqu'à rupture de façon à réaliser deux demi-tronçons ayant chacun une extrémité en forme de pointe (34),
- aligner l'un des deux demi-tronçons étirés de fibre (30) sur l'extrémité clivée (12) du tronçon de la fibre optique à maintien de polarisation (10) et mettre en contact mécanique la pointe (34) dudit demi-tronçon étiré (30) de fibre et le coeur de l'extrémité clivée (12) du tronçon de la fibre optique à maintien de polarisation (10) et
- souder sur le coeur de l'extrémité clivée (12) du tronçon de la fibre optique (10) à maintien de polarisation, une partie de la pointe (34) du demi-tronçon étiré de fibre (30) tout en retirant le restant, de façon à ne déposer finalement que l'aiguille (36) désirée.

3. Procédé selon l'une des revendications 1 ou 2, comprenant en outre l'étape consistant à fixer le tronçon de fibre optique à maintien de polarisation (10) ainsi lentillé directement sur ladite fibre (60) à coupler, ou sur un tronçon de fibre optique de nature différente (50).

4. Procédé selon la revendication 3 dans lequel ladite fibre optique (60) à coupler est une fibre monomode.

5. Procédé selon la revendication 3 dans lequel le tronçon de fibre optique de nature différente (50) est un tronçon de fibre multimode à gradient d'indice.

6. Procédé selon la revendication 3 dans lequel le tronçon de fibre optique de nature différente (50) est un tronçon de fibre multimode à saut d'indice.

7. Procédé selon l'une des revendications 1 à 6 prise en combinaison avec la revendication 2, dans lequel le tronçon de fibre (30) étiré est un tronçon de fibre multimode à gradient d'indice.

8. Procédé selon l'une des revendications 1 à 7 prise en combinaison avec la revendication 2, dans lequel l'étape de soudage précitée consiste en :
- une fusion rapide et de faible intensité de la pointe (34) du demi-tronçon étiré de fibre (30), avec retrait de ce demi-tronçon dès l'apparition du soudage de la pointe (34) sur le coeur de la fibre à maintien de polarisation (10), de façon à ne laisser qu'une aiguille (36) soudée audit coeur, et en ce que l'étape de conformation précitée de l'aiguille (36) de verre consiste en une fusion de cette aiguille à l'aide d'au moins une passe sous chauffage de faible intensité, jusqu'à l'obtention de la courbure désirée pour la lentille (20).

9. Système optique obtenu par la mise en oeuvre du procédé conforme à l'une des revendications 1 à 8, comprenant une lentille (20) en forme d'une hyperboloïde et de section droite elliptique fixée sur une première face terminale clivée (12) d'un tronçon de fibre à maintien de polarisation (10) possédant un coeur dont la section droite est elliptique et dont la température de fusion est inférieure à celle de la gaine de ce tronçon de fibre à maintien de polarisation, la base de ladite lentille (20) coïncidant sensiblement avec la section droite elliptique du coeur du tronçon de fibre à maintien de polarisation (10), et la seconde face terminale clivée (16) de ce tronçon de fibre à maintien de polarisation (10) étant placée en regard d'une face terminale clivée (62) d'une fibre optique principale à mode circulaire (60) destinée à être couplée avec un phototransducteur (40) à mode elliptique disposé en regard de la lentille.

10. Système selon la revendication 9, dans lequel le tronçon de fibre optique à maintien de polarisation (10) ainsi lentillé est fixé directement sur la fibre (60) à coupler ou sur un tronçon de fibre optique de nature différente (50).

11. Système selon la revendication 10 dans lequel la fibre optique (60) à coupler une fibre monomode.

12. Système selon la revendication 10 dans lequel le tronçon de fibre optique de nature différente (50) est un tronçon de fibre multimode à gradient d'indice.

13. Système selon la revendication 10 dans lequel le tronçon de fibre optique de nature différente (50) est un tronçon de fibre multimode à saut d'indice.

14. Système selon l'une des revendications 9 ou 12, comprenant, entre la fibre optique principale (60) à coupler et le phototransducteur (40), un ensemble composé successivement d'un tronçon de fibre multimode à gradient d'indice (50), du tronçon de fibre à maintien de polarisation (10) et de la microlentille (20).

15. Système selon l'une des revendications 9 à 14, dans lequel la microlentille (20) est constituée d'une lentille multiple (20) à rayon de courbure croissant en éloignement du phototransducteur (40).

16. Système selon l'une des revendications 9 à 15, dans lequel les différents éléments (20, 10, 50) intercalés entre le phototransducteur (40) et la fibre principale (60) à coupler sont fixés par épissurage.

17. Système selon l'une des revendications 12 ou 14, dans lequel le tronçon (50) de fibre multimode à gradient d'indice est conçu pour adapter le faisceau au mode propre de la fibre optique (60) à coupler.

18. Système selon la revendication 13, dans lequel le tronçon de fibre multimode à saut d'indice est conçu pour adapter le diamètre du faisceau optique au diamètre utile d'un morceau de fibre multimode (50) à gradient d'indice.

19. Système selon l'une des revendications 12, 14 ou 17, dans lequel la longueur du tronçon (50) de fibre optique multimode à gradient d'indice est de l'ordre de [n + 1] pitch/2 avec (n = 0, 1, 2...).

## Patentansprüche

1. Verfahren zum Koppeln einer optischen Faser (60), die eine Mode mit kreisförmiger Feldverteilung aufweist, mit einem Lichtwandler (40), der eine Mode mit einer Feldverteilung elliptischer Art aufweist, welches die Schritte umfaßt, die darin bestehen, daß eine Nadel (36) aus dem Material der optischen Faser an einer ersten abgetrennten Endfläche (12) eines Faserstückes (10) mit konstanter Polarisation ausgebildet wird, das einen Kern aufweist, dessen Querschnitt elliptisch ist und dessen Schmelztemperatur unter der des Mantels des Faserstückes (10) mit konstanter Polarisation liegt, und die Nadel (36) unter Erwärmung so geformt wird, daß sich eine Linse (20) mit elliptischem Querschnitt und Hyperboloidprofil ergibt, deren Grundfläche im wesentlichen dem elliptischen Querschnitt des Kerns des Faserstückes (10) mit konstanter Polarisation zusammenfällt, und dann die zweite abgetrennte Endfläche (16) des Faserstückes (10) mit konstanter Polarisation einer abgetrennten Endfläche (62) der besagten Faser mit einer Mode mit kreisförmiger Feldverteilung gegenüberstehend angeordnet wird.

2. Verfahren nach Anspruch 1 bei dem der Schritt der Ausbildung der Nadel aus dem Fasermaterial zum Formen der Linse (20) mit elliptischem Querschnitt und Hyperboloidprofil darin besteht, daß
- das optische Faserstück mit konstanter Polarisation abgetrennt wird,
- koaxial unter Einwirkung einer Erwärmung ein Stück einer anderen Faser (30) bis zum Bruch gezogen wird, derart, daß zwei Halbteilstücke gebildet werden, von denen jedes ein Ende (34) in Form von einer Spitze hat,
- eines der beiden gezogenen Halbteilstücke der Faser (30) zum abgetrennten Ende (12) des optischen Faserstückes mit konstanter Polarisation (10) ausgerichtet wird und die Spitze (34) des besagten gezogenen Halbteilstücks (30) der Faser und der Kern des abgetrennten Endes (12) des optischen Faserstückes (10) mit konstanter Polarisation in mechanischen Kontakt gebracht werden und
- an den Kern des abgetrennten Endes (12) des optischen Faserstückes (10) mit konstanter Polarisation ein Teil der Spitze (34) des gezogenen Halbteilstückes (30) der Faser geschweißt wird, indem der Rest entfernt wird, derart, daß letztendlich nur die gewünschte Nadel (36) ausgebildet ist.

3. Verfahren nach Anspruch 1 oder 2, welches den weiteren Schritt umfaßt, der darin besteht, daß das optische Faserstück (10) mit konstanter Polarisation direkt an der besagten zu koppelnden Faser (60) oder an einem optischen Faserstück (50) anderer Art befestigt wird.

4. Verfahren nach Anspruch 3, bei dem die besagte zu koppelnde optische Faser (60) eine Einmodenfaser ist.

5. Verfahren nach Anspruch 3, bei dem das optische Faserstück (50) anderer Art ein Mehrmoden-Faserstück mit Indexgradient ist.

6. Verfahren nach Anspruch 3, bei dem das optische Faserstück (50) anderer Art ein Mehrmoden-Faserstück mit Indexstufe ist.

7. Verfahren nach einem der Ansprüche 1 bis 6 in Kombination mit Anspruch 2, bei dem das gezogene Faserstück (30) ein Mehrmoden-Faserstück mit Indexgradient ist.

8. Verfahren nach einem der Ansprüche 1 bis 7 in Kombination mit Anspruch 2, bei dem der genannte Schritt des Schweißens in
- einem schnellen Aufschmelzen in geringer Stärke der Spitze (34) des gezogenen Faserhalbteilstücks (30) bei Schrumpfen der Halbteilstücke seit der Verschweißung der Spitze (34) am Kern der Faser (10) mit konstanter Polarisation (10) derart, daß nur die Nadel (36) bleibt, die an den Kern geschweißt ist, besteht, und daß der vorgenannte Schritt der Formung der Glasnadel (36) in einer Aufschmelzung dieser Nadel mit Hilfe wenigstens eines Durchlaufs unter Erwärmung in geringer Stärke besteht, bis die gewünschte Krümmung für die Linse (20) erhalten ist.

9. Optisches System, das durch die Durchführung des Verfahrens nach einem der Ansprüche 1 bis 8 erhalten wird, mit einer Linse (20) in Form eines Hyperboloiden und mit elliptischem Querschnitt, die an einer ersten abgetrennten Endfläche (12) eines Faserstückes (10) mit konstanter Polarisation befestigt ist, das einen Kern aufweist, dessen Querschnitt elliptisch ist und dessen Schmelztemperatur unter der des Mantels des Faserstückes mit konstanter Polarisation liegt, wobei die Grundfläche der besagten Linse (20) im wesentlichen mit dem elliptischen Querschnitt des Kerns des Faserstückes (10) mit konstanter Polarisation zusammenfällt und die zweite abgetrennte Endfläche (16) des Faserstückes (10) mit konstanter Polarisation einer abgetrennten Endfläche (62) der optischen Hauptfaser (60) mit einer Mode mit kreisförmiger Feldverteilung gegenüberstehend angeordnet ist, die dazu bestimmt ist, mit einem Lichtwandler (40) gekoppelt zu werden, der eine Mode mit elliptischer Feldverteilung aufweist und der Linse gegenüberstehend angeordnet ist.

10. System nach Anspruch 9, bei dem das optische Faserstück (10) mit konstanter Polarisation und somit die Linse direkt an der zu koppelnden Faser (60) oder an einem optischen Faserstück (50) anderer Art befestigt ist.

11. System nach Anspruch 10, bei dem die zu koppelnde optische Faser (60) eine Einmoden-Faser ist.

12. System nach Anspruch 10, bei dem das optische Faserstück (50) anderer Art ein Mehrmoden-Faserstück mit Indexgradient ist.

13. System nach Anspruch 10, bei dem das optische Faserstück (50) anderer Art ein Mehrmoden-Faserstück mit Indexstufe ist.

14. System nach einem der Ansprüche 9 oder 12, welches zwischen der optischen Hauptfaser (60), die zu koppeln ist, und dem Lichtwandler (40) eine Anordnung aufweist, die nacheinander aus einem Mehrmoden-Faserstück (50) mit Indexgradient, dem Faserstück (10) mit konstanter Polarisation und der Mikrolinse (20) aufgebaut ist.

15. System nach einem der Ansprüche 9 bis 14, bei dem die Mikrolinse (20) aus einer Mehrfachlinse (20) mit einem Krümmungsradius besteht, der mit zunehmender Entfernung vom Lichtwandler (40) zunimmt.

16. System nach einem der Ansprüche 9 bis 15, bei dem die verschiedenen Bauelemente (20, 10, 50) zwischen dem Lichtwandler (10) und der zu koppelnden Hauptfaser (60) durch Spleißen befestigt sind.

17. System nach einem der Ansprüche 12 oder 14, bei dem das Mehrmoden-Faserstück (50) mit Indexgradient so ausgebildet ist, daß es das Bündel an die passende Mode der zu koppelnden optischen Faser (60) anpasst.

18. System nach Anspruch 13, bei dem das Mehrmoden-Faserstück mit Indexsprung so ausgebildet ist, daß es den Durchmesser des Lichtbündels an den Nutzdurchmesser eines Mehrmoden-Faserstücks (50) mit Indexgradienten anpasst.

19. System nach einem der Ansprüche 12, 14 oder 17, bei dem die Länge des optischen Mehrmoden-Faserstückes (50) mit Indexgradient in der Größenordnung von [n + 1] Faserperiode/2 mit (n = 0, 1, 2....) liegt.

## Claims

1. A method of coupling an optical fiber (60) possessing a circular mode with a phototransducer (40) possessing an elliptical type mode, the method comprising the steps of depositing a needle (36) of optical-fiber material on a first cleaved end face (12) of a segment of polarization-maintaining fiber (10) possessing a core having a cross-section that is elliptical and having a melting temperature that is lower than that of the cladding of the segment of polarization-maintaining fiber, of shaping said needle (36) under heat in order to make a lens (20) of elliptical cross-section and of hyperboloid profile having a base that coincides substantially with the elliptical cross-section of the core of the segment of polarization-maintaining fiber (10), and then of placing the second cleaved end face (16) of said segment of polarization-maintaining fiber (10) facing a cleaved end face (62) of said circular-mode fiber (60).

2. A method according to claim 1, in which the step of depositing the needle of material designed to form the lens (20) of elliptical cross-section and of hyperboloid profile consists in:
cleaving the segment of polarization-maintaining optical fiber (10);
stretching, while applying heat thereto, a segment of another fiber (30) axially to rupture so as to make two half-segments each having one end in the form of a tip (34);
aligning one of the two stretched half-segments of fiber (30) on the cleaved end (12) of the segment of the polarization-maintaining optical fiber (10) and mechanically putting the tip (34) of said stretched half-segment of fiber (30) into contact with the core of the cleaved end (12) of the segment of the polarization-maintaining optical fiber (10); and
welding a portion of the tip (34) of the stretched half-segment of fiber (30) onto the core of the cleaved end (12) of the segment of the polarization-maintaining optical fiber (10) while withdrawing the remainder, so as to end up depositing only the needle (36).

3. A method according to claim 1 or 2, including a further step which consists in taking the segment of polarization-maintaining optical fiber (10) fitted in this way with a lens and fixing it directly on said fiber (60) to be coupled, or on a segment of optical fiber of a different kind (50).

4. A method according to claim 3, in which said optical fiber (60) to be coupled is a monomode fiber.

5. A method according to claim 3, in which the segment of optical fiber of a different kind (50) is a segment of graded index multimode fiber.

6. A method according to claim 3, in which the segment of optical fiber of a different kind (50) is a segment of step index multimode fiber.

7. A method according to any one of claims 1 to 6, taken in combination with claim 2, in which the segment of stretched fiber (30) is a segment of graded index multimode fiber.

8. A method according to any one of claims 1 to 7, taken in combination with claim 2, in which the said welding step consists in:
rapid and low intensity fusion of the tip (34) of the half-segment of stretched fiber (30), accompanied by withdrawal of the half-segment as soon as welding of the point (34) appears on the core of the polarization-maintaining fiber (10) so as to leave only one needle (36) welded to said core, and in that said step of shaping the needle (36) of glass then consists in fusing said needle by means of at least one pass under low intensity heating to obtain the curvature desired for the lens (20).

9. An optical system obtained by implementing the method according to any one of claims 1 to 8, comprising a lens (20) in the form of a hyperboloid and of elliptical cross-section fixed on a first cleaved end face (12) of a segment of polarization-maintaining fiber (10) possessing a core having a cross-section that is elliptical and having a melting temperature that is lower than that of the cladding of the segment of polarization-maintaining fiber, the base of said lens (20) coinciding substantially with the elliptical cross-section of the core of the segment of polarization-maintaining fiber (10), and the second cleaved end face (16) of said segment of polarization-maintaining fiber (10) being placed to face a cleaved end face (62) of a circular-mode main optical fiber (60) designed to be coupled with an elliptical-mode phototransducer (40) disposed facing the lens.

10. A system according to claim 9, in which the segment of polarization-maintaining optical fiber (10) fitted with a lens in this way is directly fixed on the fiber (60) to be coupled, or on a segment of optical fiber of a different kind (50).

11. A system according to claim 10, in which the optical fiber (60) to be coupled is a monomode fiber.

12. A system according to claim 10, in which the segment of optical fiber of a different kind (50) is a segment of graded index multimode fiber.

13. A system according to claim 10, in which the segment of optical fiber of a different kind (50) is a segment of step index multimode fiber.

14. A system according to claim 9 or 12, comprising, between the main optical fiber (60) to be coupled and the phototransducer (40), an assembly made up successively of a segment of graded index multimode fiber (50), the segment of polarization-maintaining fiber (10), and the microlens (20).

15. A system according to any one of claims 9 to 14, in which the microlens (20) is constituted by a multiple lens (20) having increasing radius of curvature with increasing distance away from the phototransducer (40).

16. A system according to any one of claims 9 to 15, in which the various elements (20, 10, 50) interposed between the phototransducer (40) and the main fiber (60) to be coupled are fixed by splicing.

17. A system according to claim 12 or 14, in which the segment of graded index multimode fiber (50) is designed to adapt the beam to the mode specific to the optical fiber (60) to be coupled.

18. A system according to claim 13, in which the segment of step index multimode fiber is designed to adapt the diameter of the light beam to the working diameter of the piece of graded index multimode fiber (50).

19. A system according to any one of claims 12, 14, and 17, in which the length of the segment of graded index multimode optical fiber (50) is of the order of [n + 1] × pitch/2, where [n = 0, 1, 2, ...].
